# EUROPEAN PATENT APPLICATION

(11) **EP 2 402 390 A1**
(43) Date of publication of application: **04.01.2012**
(21) Application number: 10167829.0
(22) Date of filing: 30.06.2010
(51) Int. Cl.: C08K 5/3435, C08K 9/10

(54) **Particles with a hindered amine light stabilizer and a microporous organic polymer**

(71) Applicant: BASF SE, 67056 Ludwigshafen (DE)
(72) Inventor: Schöning, Kai-Uwe, 4104 Oberwil (CH)

(57) **Abstract**

Particles with a hindered amine light stabilizer and a microporous organic polymer

The present invention describes a microporous particle comprising
a) a compound of formula I 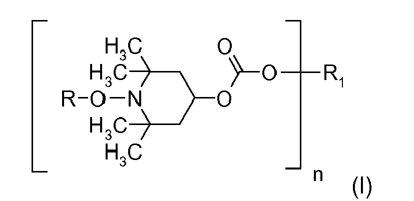 wherein
the radicals R are independently of one another an alkyl group or a hydroxyalkyl group having 1-30 carbon atoms or an alkenyl group having 2-30 carbon atoms,
n is an integer from 1 to 4,
when n = 1
R₁ is an alkyl group having 1-22 carbon atoms, an alkenyl group having 2-22 carbon atoms or the group represented by the formula II 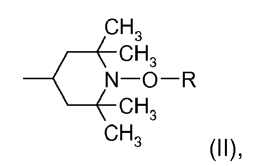 when n = 2 to 4
R₁ is an organic group having 2-20 carbon atoms of valency n,
and
b) a microporous material containing an organic polymer. Furthermore, a process for manufacturing the particles and their use for stabilization of synthetic polymers is described.

## Description

Additives for polymer stabilization are either in a liquid or in a solid state. They are usually added to a synthetic polymer during its processing step, for example during polymer extrusion. Solid additives might be added as such or in the form of a master-batch, i.e. a concentrated solid formulation of the additive in a further polymer. Typical physical forms are powder and - more preferable in regard to dust -, pellets or granules.

In contrast, liquid additives, for example the sterically hindered amine light stabilizer Tinuvin 123 (RTM BASF), require usually a pump and a mixer combination for homogenous distribution into the polymer pellets before entering the feed section of the extruder. Liquid additives are difficult to handle without special equipment for accurate dosing, for example as described in WO 2006/010291 A. If such equipment is not desirable, methods to turn liquid additives into solid forms are of interest.

A method is for example the blending of the liquid additive with a suitable auxiliary polymer to obtain a finally solid form, which can be seen as a specific type of master-batch. The suitable auxiliary can also be a solid lubricant, for example as described in EP 5514.

Another method is encapsulation of the liquid additive by a solution polymerization with suited monomers to obtain a core shell structure with a solid encapsulation layer.

The present invention relates to a microporous particle comprising
a) a compound of formula I 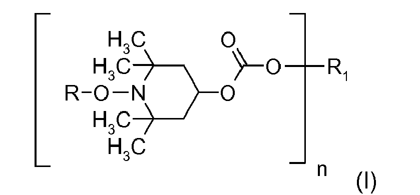 wherein
   the radicals R are independently of one another an alkyl group or a hydroxyalkyl group having 1-30 carbon atoms or an alkenyl group having 2-30 carbon atoms,
   n is an integer from 1 to 4,
   when n = 1
   R₁ is an alkyl group having 1-22 carbon atoms, an alkenyl group having 2-22 carbon atoms or the group represented by the formula II 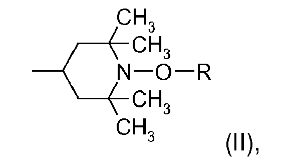 when n = 2 to 4
   R₁ is an organic group having 2-20 carbon atoms of valency n, and
b) a microporous material containing an organic polymer.

Examples of an alkyl group having 1-30 carbon atoms represented by R in the general formulae I and II are linear- or branched-alkyl groups such as methyl, ethyl, propyl, isopropyl, butyl, isobutyl, sec-butyl, tert-butyl, pentyl, sec-pentyl, tert-pentyl, hexyl, heptyl, octyl, iso-octyl, 2-ethylhexyl, tert-octyl, nonyl, isononyl, decyl, undecyl, dodecyl, tridecyl, tetradecyl, pentadecyl, hexadecyl, heptadecyl and octadecyl, and cycloalkyl groups such as cyclohexyl.

Examples of a hydroxyalkyl group having 1-30 carbon atoms represented by R in the general formulae I and II are 2-hydroxyethyl, 2-hydroxypropyl, 2-hydroxybutyl and 2-hydroxy-2-methylpropyl.

R may be identical or different every n repeating units.

Examples of an alkenyl group having 2-30 carbon atoms represented by R in the general formula are alkenyl groups corresponding to the aforesaid alkyl groups such as vinyl, allyl, butenyl, pentenyl and oleyl.

In the formula I, when n is 1, R₁ is an alkyl group having 1-22 carbon atoms, an alkenyl group having 2-22 carbon atoms, or a group having the formula II.

In the formula I, when n = 1, examples of an alkyl group having 1-22 carbon atoms represented by R₁ are methyl, ethyl, propyl, isopropyl, butyl, isobutyl, sec-butyl, tert-butyl, pentyl, sec-pentyl, tert-pentyl, hexyl, heptyl, octyl, iso-octyl, 2-ethylhexyl, tert-octyl, nonyl, isononyl, decyl, undecyl, dodecyl, tridecyl, tetradecyl, pentadecyl, hexadecyl, heptadecyl, octadecyl and behenyl.

In the formula I, when n = 1, examples of an alkenyl group having 2-22 carbon atoms represented by R₁ are alkenyl groups corresponding to the aforesaid alkyl groups such as vinyl, allyl, butenyl, pentenyl and oleyl.

In the formula I, when n = 1, and R₁ is a group having the aforesaid formula II, R in the formula II can be different to R in the formula I or R in formula II can be identical to R in the formula I.

Preferably, in formula I, when n = 1, and R₁ is a group having the aforesaid general formula II, R in the formula II is identical to R in the formula I.

R is preferably an alkyl group having 10-22 carbon atoms.

In the formula I, when n = 2 to 4, examples of an organic group having 2-20 carbon atoms of valency n represented by R₁ are residues other than the hydroxyl group of a multivalent hydroxyl compound of valency n.

Examples of the aforesaid multivalent hydroxyl compound are ethylene glycol, propylene glycol, 1,3-propanediol, 1,2-butanediol, 1,3-butanediol, 1,4-butanediol, neopentylglycol, 1,6-hexanediol, 1,3-cyclohexanediol, 1,4-cyclohexanediol, bisphenol A, bisphenol F, diethylene glycol, triethylene glycol, glycerol, trimethylol propane and pentaerythritol.

Particular examples of R₁ are ethane-1,2-diyl, propane-1,2-diyl, propane-1,3-diyl, butane-1,2-diyl, butane-1,3-diyl, butane-1,4-diyl, 2,2-dimethylpropane-1,3-diyl, hexane-1,6-diyl, cyclohexane-1,2-diyl, cyclohexane-1,3-diyl, cyclohexane-1,4-diyl, 2,2-bis-(phenyl)-propane-4',4"-diyl, bis-(phenyl)-methane-4',4"-diyl, bis-(phenyl)-methane-2',4"-diyl, bis-(phenyl)-methane-2',2"-diyl, 2-(ethoxy-)ethyl-1,2'-diyl, 2-[(2'-ethoxy)-ethoxy]ethyl-1,2"-diyl, propane-1,2,3-triyl, 2,2-dimethyl-butane-1,1',1"-triyl and 2,2-dimethyl-propane-1,1',1",3-tetrayl.

Preferred is a particle, wherein in formula I R is an alkyl group having 1-22 carbon atoms, n is 1 and R₁ is a group represented by formula II.

Preferred is a particle, wherein in formula I R is undecyl, n is 1 and R₁ is a group represented by formula II.

Preferably, the compound of formula I possess a melting point below 50°C.

A material, which has interconnecting pores or holes that are small enough, e.g. less than 100 micrometers, is said to be microporous. A microporous material can be defined as having a collection of holes or cells surrounded by a solid outer material, typically referred to as the matrix, wherein the holes or cells are interconnected by pores. A microporous material is extensively permeated with a network of pores into which an additive can be introduced. This results in structures of essentially spherical, interconnected void spaces, with void volumes ranging from 20 to 90%. For example, the void volumes are 30% to 80%, in particular 50 to 80%. Typical pores have a median size of 0.1 micrometer to 10 micrometers, for example from 0.1 micrometer to 1 micrometer, with the cell size ranging up to 30 micrometers and with no particular distribution of shape or size being required. The pore size of the microporous material will influence the transport properties of the additives, i.e. especially during the loading of the additives.

Preferred is a particle, wherein the pore size of the microporous material is 0.1 to 4 micrometers, in particular 0.1 to 1 micrometer.

The microporous material contains an organic polymer. Preferably, the microporous material consists of more than 60% by weight of organic polymer based on the total weight of microporous material, in particular more than 80% by weight of organic polymer, especially more than 95% by weight of organic polymer.

Preferably, the microporous material contains less than 10% by weight of an inorganic microporous material like silica or zeolite based on the total weight of the microporous material, in particular less than 2% by weight of an inorganic microporous material like silica or zeolite and especially, the microporous material is free of an inorganic material like silica or zeolite.

The microporous material comprising organic polymer can contain low levels of residual organic material, which originates from the manufacture of the organic polymer itself. A low level is defined as below 1 % by weight of the organic polymer. Examples of such residual organic materials are additives incorporated into the organic polymer during its processing for stabilization or improved processability. Further examples are residual solvents from the conversion process of an organic polymer as such into an organic polymer in the physical form of a microporous material.

The microporous material comprising an organic polymer can contain low levels of nucleating agents, which have been added to enhance the crystallization tendency. The latter one is beneficial during the conversion process of an organic polymer as such into an organic polymer in the physical form of a microporous material. A low level is defined as below 1 % by weight of the organic polymer, especially between 0.001 % and 0.3% by weight of the organic polymer and in particular between 0.01 % and 0.3% by weight of the organic polymer. For example, the employment of sorbitol type of nucleating agents for the conversion of polypropylene as an organic polymer into the physical form of a microporous material is known from US 4726989. US 2003/0036577 provides further types of beta-nucleating agents beneficial during conversion of polypropylene into the physical form of a microporous material.

Preferably, organic polymers for the microporous material are thermoplastic organic polymers. These are for example homo- or copolymers of polyolefins, polystyrenes, polyvinylalcohols, polyacrylates, polymethacrylates, polyesters, polyamides and polycarbonates. Copolymers are for example poly(styrene-co-acrylonitrile) or poly(styrene-co-butadiene-co-acrylonitrile), which include also grafted type of copolymers. Specific examples are high density (HD) polyethylene, linear low density (LLD) polyethylene, polypropylene, polystyrene, poly(ethylene-co-methacrylate), poly(ethylene-co-vinylacetate), polyamide 6, polyamide 6.6, polyamide 12, poly(ethylene terephthalate), biopolyester, poly(styrene-co-butadiene) and polycarbonate.

Preferably, the organic polymer is chemically inert with respect to the additive which is to be loaded to the organic polymer in the form of a microporous material.

Preferred is a particle, wherein the microporous material contains an organic polymer selected from the group of homo- or copolymers of polyolefins, polystyrenes, polyvinylalcohols, polyacrylates, polymethacrylates, polyesters, polyamides and polycarbonates.

Preferred is a particle, wherein the organic polymer is selected from high density polyethylene, linear low density polyethylene, polypropylene, polystyrene, poly(ethylene-co-methacrylate), poly(ethylene-co-vinylacetate), polyamide 6, polyamide 6.6, polyamide 12, poly(ethylene terephthalate), biopolyester, poly(styrene-co-butadiene) and polycarbonate.

Microporous particles (or alternatively 'microcapsules' or 'microparticles' or 'microporous polymer granulates') contain at least one microporous material. The microporous particles, which may assume a variety of shapes, generally have diameters from 0.5 to 1000 micrometers, in particular diameters from 5 to 1000 micrometers, especially 20 to 500 micrometers and for example 100 to 300 micrometers.

Preferred is a particle, wherein the diameter of the particle is 5 to 1000 micrometers.

An important feature is the use of preformed microporous particles for the incorporation of the additive, starting with the use of preformed microporous particles without loaded additives and adding the additives in a separate step.

Microporous materials containing organic polymers can be obtained from organic polymers as such by known methods. The conversion of thermoplastic polymers as such into the physical form of microporous materials is described for example in US 4247498. US 4726989 and US 2003/0036577 describe the conversion of polypropylene as such into the physical form of a microporous material. US 4645664 describes the conversion of polylactide as such into the physical form of a microporous material.

A further embodiment is a process for manufacturing a microporous particle comprising a) a compound of formula I and b) a microporous material containing an organic polymer, which comprises the addition of a compound of formula I to a microporous material containing an organic polymer.

A compound of formula I is incorporated into the micropores of the microporous particle, i.e. it is trapped or imbibed onto the microporous material. This so-called loading of the microporous material can be achieved by different processes.

For example, a compound of formula I is dissolved in a suited solvent under the applied process conditions, the microporous material is added, the mixture is stirred for a certain time period and the solvent is evaporated under careful stirring. An increased temperature accelerates the loading of the microporous material with a compound of formula I. However, the applied temperature of the process has to be below the melting range of the microporous material. Accordingly, the applied temperature is for example from 20°C to 130°C, in particular from 20°C to 80°C.

Application of pressure or vacuum, respectively, at the process supports the loading and should allow - in case of employment of a suited solvent - a sufficient rate of evaporation of the suited solvent. For example, the applied pressure or vacuum, respectively, is from 0.01 bar to 20 bar, especially 0.01 bar to 5 bar and in particular from 0.05 bar to 2 bar. Most preferred is 1 bar, i.e. atmospheric pressure.

A suited solvent is a solvent or a mixture of several solvents, which dissolves the compound of formula I under the applied process conditions and which can be evaporated in vacuum under the applied process conditions. However, dissolution of the microporous material under the applied process conditions has to be avoided to maintain the physical form of the microporous material.

Especially suited solvent are low-boiling alkanes, for example pentane, hexane, heptane, octane and isomeric mixtures thereof, low-boiling cycloalkanes, for example cyclopentane and cyclohexane, or low-boiling ethers, for example diethylether ro methyl-tert-butyl ether.

Dependent on the organic polymer of the microporous material, other solvents like higher-boiling alkanes, halogenated alkanes, nitroalkanes, ethers, alcohols, ketones, esters, nitriles, aromatic solvents or mixtures thereof can be employed. Specific examples are decaline, methylene chloride, chloroform, dimethylether, diethylether, methyl-tert-butylether, tetrahydrofuran, methanol, ethanol, 1-propanol, isopropanol, butanol, acetone, methylethylketone, ethyl acetate, toluene, xylene and chlorobenzene.

A suited solvent can be used to wash off residual amounts of compounds of formula I, which might stick to the outer surface of the microporous particles after loading and might hinder the free-flowing of the loaded microporous particles.

In case of a compound of formula I, which is in the liquid state under the applied process conditions, the employment of a solvent for dissolution of the compound can be avoided by addition of the microporous material into an excess of the essentially solvent-free compound of formula I. In particular, the compound of formula I is free of a solvent, i.e. a level of below 1% by weight of compound of formula I. After a sufficient time of stirring, i.e. to ensure the complete penetration of the void spaces of the microporous material for a high loading, the excess of the compound of formula I is removed by filtration. The filtration might be followed by a short washing with a suitable solvent, which removes traces of the compound of formula I and thus results in free-flowing, loaded microporous particles.

Alternatively, a compound of formula I, which is in the liquid state under the applied process conditions, can be added to the microporous material in an amount, which is completely absorbed by the microporous material. Hence, said amount should be below a previously determined loading capacity.

Time periods for stirring of the mixture are dependent from the applied process conditions. They range from 0.1 to 72 hours, preferably from 0.5 to 24 hours and most preferably form 0.5 to 8 hours.

Stirring of the microporous material and the compound of formula I can be performed by mechanical agitation in a vessel or spinning flask.

Compounds of formula I can be loaded in high amounts to microporous materials containing an organic polymer.

Preferably, the weight ratio between component (a) and component (b) is from 0.33 to 3.0, in particular from 0.33 to 2.85.

Preferred is a particle, wherein the weight ratio between component (a) and component (b) is from 0.33 to 3.0.

Preferred is a particle, wherein the component (b) contains polyethylene and the weight ratio between component (a) and component (b) is from 0.33 to 2.81.

Preferred is a particle, wherein the component (b) contains linear low density polyethylene and the weight ratio between component (a) and component (b) is from 0.33 to 2.81.

Preferred is a particle, wherein the component (b) contains high density polyethylene and the weight ratio between component (a) and component (b) is from 0.33 to 2.70, in particular from 0.33 to 2.16.

Preferred is a particle, wherein the component (b) contains low density polyethylene and the weight ratio between component (a) and component (b) is from 0.33 to 1.50, in particular from 0.33 to 0.90.

Preferred is a particle, wherein the component (b) contains polypropylene and the weight ratio between component (a) and component (b) is from 0.33 to 2.85, in particular from 0.33 to 2.30 and especially from 0.33 to 1.93.

Preferred is a particle, wherein the component (b) contains polystyrene and the weight ratio between component (a) and component (b) is from 0.33 to 1.13.

Preferred is a particle, wherein the component (b) contains poly(styrene-co-butadiene) and the weight ratio between component (a) and component (b) is from 0.33 to 0.58.

Preferred is a particle, wherein the component (b) contains poly(ethylene-co-vinylacetate) and the weight ratio between component (a) and component (b) is from 0.33 to 2.71, in particular from 0.33 to 2.58.

Preferred is a particle, wherein the component (b) contains polyester and the weight ratio between component (a) and component (b) is from 0.33 to 0.61, in particular from 0.33 to 0.53.

Preferred is a particle, wherein the component (b) contains polyamide and the weight ratio between component (a) and component (b) is from 0.33 to 2.08, in particular from 0.33 to 1.76 and especially from 0.33 to 1.34.

Preferred is a particle, wherein the component (b) contains polycarbonate and the weight ratio between component (a) and component (b) is from 0.33 to 0.43.

The microporous particles comprising a) a compound of formula I and b) a microporous material containing an organic polymer can contain one or more further additives.

A further additive is selected from the following list:
1. Antioxidants
   1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-meth¬oxymethylphenol, nonylphenols which are linear or branched in the side chains, for example 2,6-di-nonyl-4-methylphenol, 2,4-dimethyl-6-(1 '-methyl-undec-1'-yl)phenol, 2,4-dimethyl-6-(1'-methylheptadec-1'-yl)phenol, 2,4-dimethyl-6-(1'-methyltridec-1'-yl)phenol and mixtures thereof.
   1.2. Alkylthiomethylphenols, for example 2,4-dioctylthiomethyl-6-tert-butylphenol, 2,4-d ioctylthiomethyl-6-methyl phenol, 2,4-dioctylthiomethyl-6-ethylphenol, 2,6-di-dodecyl-thiomethyl-4-nonylphenol.
   1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis(3,5-di-tert-butyl-4-hydroxyphenyl) adipate.
   1.4. Tocopherols, for example α-tocopherol, β-tocopherol, γ-tocopherol, δ-tocopherol and mixtures thereof (vitamin E).
   1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thio-bis(6-tert-butyl-2-methylphenol), 4,4'-thiobis(3,6-di-sec-amylphenol), 4,4'-bis(2,6-dimethyl-4-hydroxyphenyl)disulfide.
   1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)phenol], 2,2'-methylenebis(4-methyl-6-cyclohexylphenol), 2,2'-methylene-bis(6-nonyl-4-methylphenol), 2,2'-methylenebis(4,6-di-tert-butylphenol), 2,2'-ethylidene-bis(4,6-di-tert-butylphenol), 2,2'-ethylidenebis(6-tert-butyl-4-isobutylphenol), 2,2'-methylenebis[6-(α-methylbenzyl)-4-nonylphenol],2,2'-methylenebis[6-(α,α-dimethylbenzyl)-4-nonylphenol], 4,4'-methymlenebis(2,6-di-tert-butylphenol), 4,4'-methylenebis-(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methylphenyl)-3-n-dodecylmercaptobutane, ethylene glycol bis[3,3-bis(3'-tert-butyl-4'-hydroxyphenyl)-butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis(3,5-di-tert-butyl-4-hydroxyphenyl)-propane, 2,2-bis-(5-tert-butyl-4-hydroxy-2-methylphenyl)-4-n-dodecylmercaptobutane, 1,1,5,5-tetra(5-tert-butyl-4-hydroxy-2-methylphenyl)pentane.
   1.7. O-, N- and S-benzyl compounds, for example 3,5,3',5'-tetra-tert-butyl-4,4'-di-hydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzyl-mercaptoacetate.
   1.8. Hydroxybenzylated malonates, for example dioctadecyl-2,2-bis(3,5-di-tert-butyl-2-hydroxybenzyl)malonate, di-octadecyl-2-(3-tert-butyl-4-hydroxy-5-methylbenzyl)malon-ate, di-dodecylmercaptoethyl-2,2-bis(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
   1.9. Aromatic hydroxybenzyl compounds, for example 1,3,5-tris(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
   1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxy-anilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
   1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl-3,5-di-tert-butyl-4-hydroxybenzylphosphonate, dioctadecyl-5-tert-butyl-4-hydroxy-3-methyl-benzylphosphonate, the calcium salt of the monoethyl ester of 3,5-di-tert-butyl-4-hydroxybenzylphosphonic acid.
   1.12. Acylaminophenols, for example 4-hydroxylauranilide, 4-hydroxystearanilide, octyl N-(3,5-di-tert-butyl-4-hydroxyphenyl)carbamate.
   1.13. Esters of β-(3,5-di-tert-butyl-4-hydroxyphenyl)propionic acid with mono- or polyhydric alcohols, for example with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxylethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
   1.14. Esters of β-(5-tert-butyl-4-hydroxy-3-methylphenyl)propionic acid with mono- or polyhydric alcohols, for example with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris-(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phos-pha-2,6,7-trioxabicyclo[2.2.2]octane; 3,9-bis[2-{3-(3-tert-butyl-4-hydroxy-5-methylphenyl)propionyloxy}-1,1-dimethylethyl]-2,4,8,10-tetraoxaspiro[5.5]undecane.
   1.15. Esters of β-(3,5-dicyclohexyl-4-hydroxyphenyl)propionic acid with mono- or polyhydric alcohols, for example with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-thoxabicyclo[2.2.2]-octane.
   1.16. Esters of 3,5-di-tert-butyl-4-hydroxyphenyl acetic acid with mono-or polyhydric alcohols, for example with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-thoxabicyclo[2.2.2]octane.
   1.17. Amides of β-(3,5-di-tert-butyl-4-hydroxyphenyl)propionic acid, for example N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)hydrazide, N,N'-bis[2-(3-[3,5-di-tert-butyl-4-hydroxyphenyl]-propionyloxy)ethyl]oxamide (Naugard XL-1 (RTM), supplied by Uniroyal).
   1.18. Ascorbic acid (vitamin C)
   1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenylenediamine, 4-(p-toluenesulf-amoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethyl-aminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]-ethane, 1,2-bis(phenylamino)propane, (o-tolyl)biguanide, bis[4-(1',3'-dimethylbutyl)-phenyl]amine, tert-octylated N-phenyl-1-naphthylamine, a mixture of mono- and dialkylated tert-butyl/tert-octyldiphenylamines, a mixture of mono- and dialkylated nonyldi-phenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phe-nothiazine, a mixture of mono- and dialkylated tert-butyl/tert-octylphenothiazines, a mixture of mono- and dialkylated tert-octylphenothiazines, N-allylphenothiazine, N,N,N',N'-tetraphenyl-1,4-diaminobut-2-ene, N,N-bis(2,2,6,6-tetramethylpiperid-4-yl-hexamethylenediamine, bis(2,2,6,6-tetramethylpiperid-4-yl)sebacate, 2,2,6,6-tetra-methylpiperidin-4-one, 2,2,6,6-tetramethylpiperidin-4-ol.
2. UV absorbers and light stabilisers
   2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chlorobenzotriazole, 2-(3'-tert-butyl-2'-hydroxy-5'-methylphenyl)-5-chlorobenzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis(α,α-dimethylbenzyl)-2'-hydroxyphenyl)benzotriazole, 2-(3'-tert-butyl-2'-hydroxy-5'-(2-octyloxycarbonylethyl)phenyl)-5-chlorobenzotriazole, 2-(3'-tert-butyl-5'-[2-(2-ethylhexyloxy)carbonylethyl]-2'-hydroxyphenyl)-5-chlorobenzotriazole, 2-(3'-tert-butyl-2'-hydroxy-5'-(2-methoxycarbonylethyl)-phenyl)-5-chlorobenzotriazole, 2-(3'-tert-butyl-2'-hydroxy-5'-(2-methoxycarbonylethyl)-phenyl)benzotriazole, 2-(3'-tert-butyl-2'-hydroxy-5'-(2-octyloxycarbonylethyl)phenyl)-benzotriazole, 2-(3'-tert-butyl-5'-[2-(2-ethylhexyloxy)carbonylethyl]-2'-hydroxyphenyl)-benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylenebis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; 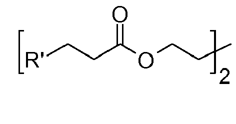 , where R' = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)phenyl]benzotriazole; 2-[2'-hydroxy-3'-(1,1,3,3-tetramethylbutyl)-5'-(α,α-dimethylbenzyl)phenyl]benzotriazole.
   2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
   2.3. Esters of substituted and unsubstituted benzoic acids, for example 4-tert-butylphenyl salicylate, phenyl salicylate, octylphenyl salicylate, dibenzoyl resorcinol, bis(4-tert-butylbenzoyl)resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
   2.4. Acrylates, for example ethyl α-cyano- β,β-diphenylacrylate, isooctyl α-cyano- β,β-diphenylacrylate, methyl α-carbomethoxycinnamate, methyl α-cyano-β-methyl-p-methoxycinnamate, butyl α-cyano-β-methyl-p-methoxycinnamate, methyl α-carbomethoxy-p-methoxycinnamate and N-(β-carbomethoxy-β-cyanovinyl)-2-methylindoline.
   2.5. Nickel compounds, for example nickel complexes of 2,2'-thiobis[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenylundecylketoxime, nickel complexes of 1-phenyl-4-lauroyl-5-hydroxypyrazole, with or without additional ligands.
   2.6. Sterically hindered amines, for example bis(2,2,6,6-tetramethyl-4-piperidyl)-sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzyl-malonate, the condensate of 1-(2-hydroxyethyl)-2,2,6,6-tetramethyl-4-hydroxy-piperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butanetetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)malonate, 3-n-octyl-7,7,9,9-tetramethyl-1,3,8-triazaspiro[4.5]decane-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)ethane, the condensate of 2-chloro-4,6-di-(4-n-butylamino-1,2,2,6,6-pentamethylpiperidyl)-1,3,5-triazine and 1,2-bis(3-aminopropyl-amino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidine-2,5-dione, 3-dodecyl-1-(1,2,2,6,6-pentamethyl-4-piperidyl)pyrrolidine-2,5-dione, a mixture of 4-hexadecyloxy-and 4-stearyloxy-2,2,6,6-tetramethylpiperidine, a condensate of N,N'-bis(2,2,6,6-tetramethyl-4-piperidyl)hexamethylenediamine and 4-cyclohexylamino-2,6-dichloro-1,3,5-triazine, a condensate of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); a condensate of 1,6-hexanediamine and 2,4,6-trichloro-1,3,5-triazine as well as N,N-dibutylamine and 4-butylamino-2,2,6,6-tetramethylpiperidine (CAS Reg. No. [192268 64-7]); N-(2,2,6,6-tetramethyl-4-piperidyl)-n-dodecylsuccinimide, N-(1,2,2,6,6-pentamethyl-4-piperidyl)-n-dodecylsuccinimide, 2-undecyl-7,7,9,9-tetramethyl-1-oxa-3,8-diaza-4-oxo-spiro[4,5]decane, a reaction product of 7,7,9,9-tetramethyl-2-cycloun-decyl-1-oxa-3,8-diaza-4-oxospiro-[4,5]decane and epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, a diester of 4-methoxy-methylenemalonic acid with 1,2,2,6,6-pentamethyl-4-hydroxypiperidine, poly[methylpropyl-3-oxy-4-(2,2,6,6-tetramethyl-4-piperidyl)]siloxane, a reaction product of maleic acid anhydride-α-olefin copolymer with 2,2,6,6-tetramethyl-4-aminopiperidine or 1,2,2,6,6-pentamethyl-4-aminopiperidine.
   2.7. Oxamides, for example 4,4'-dioctyloxyoxanilide, 2,2'-diethoxyoxanilide, 2,2'-dioctyl-oxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
   2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propylmoxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxy-phenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxypropyloxy)phenyl]-4,6-bis(2,4-dimethyl)-1,3,5-triazine, 2-[4-(dodecyloxy/tri-decyloxy-2-hydroxypropoxy)-2-hydroxyphenyl]-4,6-bis(2,4-dimethylphenyl)-1,3,5-triazine, 2-[2-hydroxy-4-(2-hydroxy-3-dodecyloxypropoxy)phenyl]-4,6-bis(2,4-dimethylphenyl)-1,3,5-triazine,2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxypropoxy)phenyl]-1,3,5-triazine, 2-(2-hydroxyphenyl)-4-(4-methoxyphenyl)-6-phenyl-1,3,5-triazine, 2-{2-hydroxy-4-[3-(2-ethylhexyl-1-oxy)-2--hydroxypropyloxy]-phenyl}-4,6-bis¬(2,4-dimethylphenyl)-1,3,5-triazine.
3. Metal deactivators, for example N,N'-diphenyloxamide, N-salicylal-N'-salicyloyl hydrazine, N,N'-bis(salicyloyl)hydrazine, N,N'-bis(3,5-di-tert-butyl-4-hydroxyphenylpropionyl)hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)-thiopropionyl dihydrazide.
4. Phosphites and phosphonites, for example triphenyl phosphite, diphenylalkyl phosphites, phenyldialkyl phosphites, tris(nonylphenyl) phosphite, trilauryl phosphite, trioctadecyl phosphite, distearylpentaerythritol diphosphite, tris(2,4-di-tert-butylphenyl) phosphite, diisodecyl pentaerythritol diphosphite, bis(2,4-di-tert-butylphenyl)pentaerythritol diphosphite, bis(2,4-di-cumylphenyl)pentaerythritol diphosphite, bis(2,6-di-tert-butyl-4-methylphenyl)pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz[d,g]-1,3,2-dioxaphosphocin, bis(2,4-di-tert-butyl-6-methylphenyl)methyl phosphite, bis(2,4-di-tert-butyl-6-methylphenyl)ethyl phosphite, 6-fluoro-2,4,8,10-tetra-tert-butyl-12-methyl-dibenz[d,g]-1,3,2-dioxaphosphocin, 2,2',2"-nitrilo-[triethyltris(3,3',5,5'-tetra-tert-butyl-1,1'-biphenyl-2,2'-diyl)phosphite], 2-ethylhexyl-(3,3',5,5'-te¬tra-tert-butyl-1,1'-biphenyl-2 ,2'-diyl)phosphite, 5-butyl-5-ethyl-2-(2,4,6-tri-tert-butylphenoxy)-1,3,2-dioxaphosphirane.
   The following phosphites are especially preferred:
   Tris(2,4-di-tert-butylphenyl) phosphite (Irgafos 168, RTM BASF), tris(nonylphenyl) phosphite,

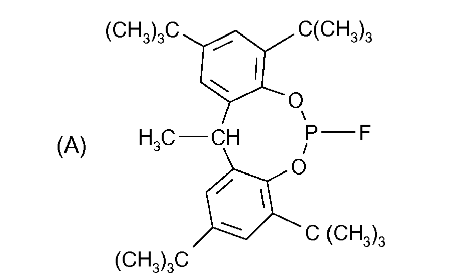

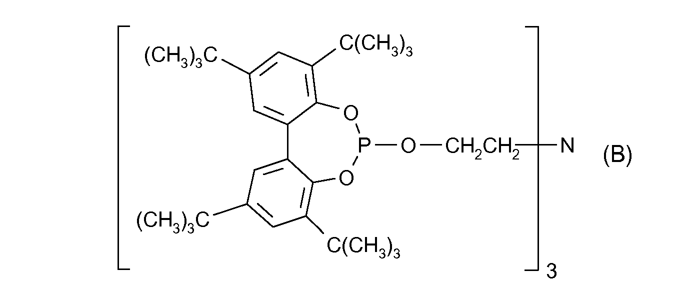

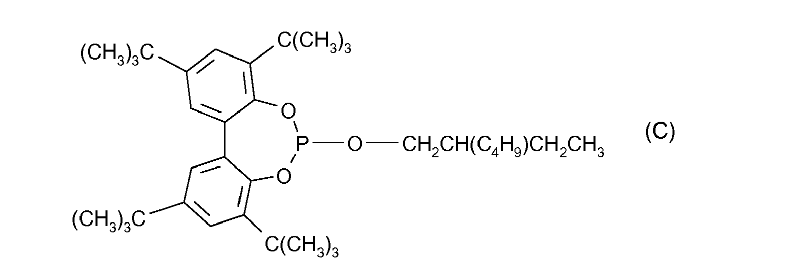

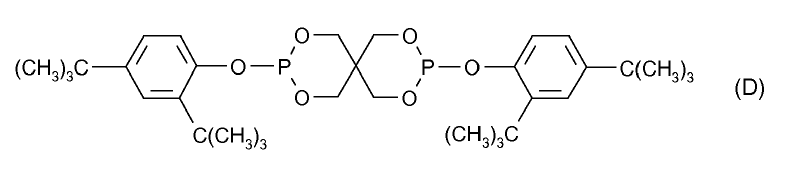

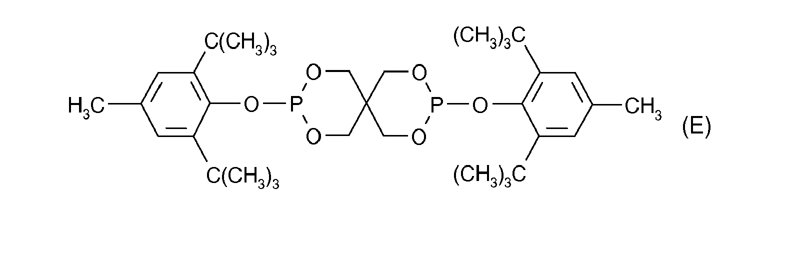

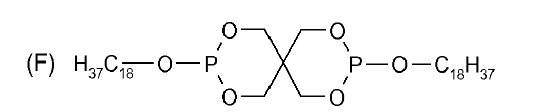

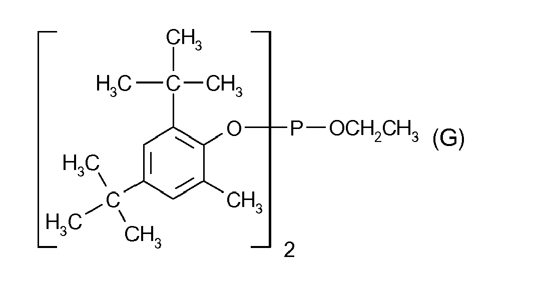

5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxyl-amine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example N-benzyl-alpha-phenylnitrone, N-ethyl-alpha-methylnitrone, N-octyl-alpha-heptylnitrone, N-lauryl-alpha-undecylnitrone, N-tetradecyl-alpha-tridecyl-nitrone, N-hexadecyl-alpha-pentadecylnitrone, N-octadecyl-alpha-heptadecylnitrone, N-hexadecyl-alpha-heptadecylnitrone, N-ocatadecyl-alpha-pentadecylnitrone, N-heptadecyl-alpha-heptadecylnitrone, N-octadecyl-alpha-hexadecylnitrone, nitrone derived from N,N-dialkylhydroxylamine derived from hydrogenated tallow amine.
7. Thiosynergists, for example dilauryl thiodipropionate or distearyl thiodipropionate.
8. Peroxide scavengers, for example esters of α-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Benzofuranones and indolinones, for example those disclosed in US-A-4,325,863; US A-4,338,244; US-A-5,175,312; US-A-5,216,052; US-A-5,252,643; DE-A-4316611; DE-A-4316622; DE-A-4316876; EP-A-0589839 or EP-A-0591102 or 3-[4-(2-acetoxy-ethoxy)phenyl]-5,7-di-tert-butylbenzofuran-2-one, 5,7-di-tert-butyl-3-[4-(2-stearoyloxy-ethoxy)phenyl]benzofuran-2-one, 3,3'-bis[5,7-di-tert-butyl-3-(4-[2-hydroxyethoxy]-phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butylbenzofuran-2-one.
10. Acid scavengers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example calcium stearate, zinc stearate, magnesium behenate, magnesium stearate, sodium ricinoleate and potassium palmitate, antimony pyrocatecholate or zinc pyrocatecholate.
11. Nucleating agents, for example mono- or polycarboxylic acids and the salts thereof, e.g. 4-tert-butylbenzoic acid, adipic acid, diphenylacetic acid, sodium succinate or sodium benzoate; polymeric compounds, such as ionic copolymers (ionomers). Especially preferred are 1,3:2,4-bis(3',4'-dimethylbenzylidene)sorbitol, 1,3:2,4-di(para-methyldibenzylidene)sorbitol, 1,3:2,4-di(benzylidene)sorbitol, and Irgaclear XT 386 (RTM BASF).
12. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839, EP-A-0591102; EP-A-1291384 or 3-[4-(2-acetoxyethoxy)phenyl]-5,7-di-tert-butylbenzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butylbenzofuran-2-one, 3-(3,5-dimethyl-4-pivaloyloxyphenyl)-5,7-di-tert-butylbenzofuran-2-one, 3-(3,4-dimethylphenyl)-5,7-di-tert-butylbenzofuran-2-one, 3-(2,3-dimethylphenyl)-5,7-di-tert-butyl-benzofuran-2-one, 3-(2-acetyl-5-isooctylphenyl)-5-isooctylbenzofuran-2-one.
13. Other additives, for example plasticisers, lubricants, rheology additives, catalysts, flow-control agents, optical brighteners, flameproofing agents, antistatic agents and blowing agents.

Preferred is a particle, wherein further additives are contained and selected from the group of antioxidants, light stabilizers, UV absorbers, metal deactivators, phosphites, phosphonites, hydroxylamines, nitrones, thiosynergists, peroxide scavengers, nucleating agents and acid scavengers.

Preferably, further additives are a phenolic antioxidant, a light stabilizer and/or a processing stabilizer.

Preferred is a particle, wherein an acid scavenger is contained as a further additive. In particular preferred are alkali metal salts and alkaline earth metal salts of higher fatty acids, for example calcium stearate and magnesium stearate.

Preferred is a particle, wherein further additives are an acid scavenger, a phenolic antioxidant, a light stabilizer and/or a processing stabilizer.

Preferably, the weight ratio of a further additive to the overall amount of the component of formula I is from 1:100 to 100:1, for example 1:90 to 90:1, 1:80 to 80:1, 1:70 to 70:1, 1:60 to 60:1, 1:50 to 50:1, 1:40 to 40:1, 1:30 to 30:1, 1:20 to 20:1, 1:10 to 10:1, 1:5 to 5:1, 1:4 to 4:1, 1:3 to 3:1, 1:2 to 2:1 or 1:1.

Preferably, the weight ratio between the total of component (a) and one or more further additives on one side and the component (b) on the other side is from 0.33 to 3.0, in particular from 0.33 to 2.85.

Preferred is a particle, wherein the weight ratio between the total of component (a) and one or more additives on one side and the component (b) on the other side is from 0.33 to 3.0.

In one preferred embodiment, the microporous material is in the physical form of a microporous polymer granulate sold under the trade name of Accurel MP (RTM Mem-brana GmbH). These organic polymer products are made from thermoplastic resins such as polypropylene, linear low density polyethylene, low density polyethylene, high density polypropylene, poly(ethylene-co-vinylacetate), polystyrene, poly(styrene-co-butadiene), polyester, polyamide and polycarbonate, with loading capacity (i.e. void volume) of up to 80%. The microporous particles of Accurel MP possess microspheres having diameters of 100 to 300 micrometers, void volumes of 50 to 80% and pore sizes of 0.1 to 1 micrometer.

A further embodiment is the use of microporous particles comprising a) a compound of formula I and b) a microporous material containing an organic polymer for stabilization of a synthetic polymer against degradation.

Examples of synthetic polymers are the following materials:
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature.
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either π- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylenepropylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C5-C9) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
   6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
   6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
   6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
   Herein, the aforementioned list of polyesters comprise also polyester, wherein parts of the monomers, e.g. 1,4-butanediol or lactic acid, or the whole polyester as such, e.g. polylactic acid, are synthesized by nature, e.g. by microorganisms, and are afterwards isolated.
19. Polycarbonates and polyester carbonates.
20. Polysulfones, polyether sulfones and polyether ketones.
21. Crosslinked polymers derived from aldehydes on the one hand and phenols, ureas and melamines on the other hand, such as phenol/formaldehyde resins, urea/formaldehyde resins and melamine/formaldehyde resins.
22. Drying and non-drying alkyd resins.
23. Unsaturated polyester resins derived from copolyesters of saturated and unsaturated dicarboxylic acids with polyhydric alcohols and vinyl compounds as crosslinking agents, and also halogen-containing modifications thereof of low flammability.
24. Crosslinkable acrylic resins derived from substituted acrylates, for example epoxy acrylates, urethane acrylates or polyester acrylates.
25. Alkyd resins, polyester resins and acrylate resins crosslinked with melamine resins, urea resins, isocyanates, isocyanurates, polyisocyanates or epoxy resins.
26. Crosslinked epoxy resins derived from aliphatic, cycloaliphatic, heterocyclic or aromatic glycidyl compounds, e.g. products of diglycidyl ethers of bisphenol A and bisphenol F, which are crosslinked with customary hardeners such as anhydrides or amines, with or without accelerators.
27. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

Preferred synthetic polymers, which are to be stabilized against degradation, are thermoplastic synthetic polymers. Especially preferred thermoplastic synthetic polymers are polyacetals, polyolefins such as polypropylene or polyethylene, polyether/polyurethanes, polyesters such as polybutylene terephthalate, polycarbonates or polyamides.

The microporous particles containing a compound of formula I will preferably be added to the synthetic polymer in such an amount that a final concentration of 0.01 to 10% by weight of a compound of formula I based on the weight of said synthetic polymer results. Preferred is 0.01 to 2%, typically 0.1 to 2% by weight of a compound of formula I based on the weight of said synthetic polymer.

The microporous particles are added to the synthetic polymer, for example prior to processing of the synthetic polymer. The synthetic polymer is typically at room temperature in a solid state, for example in the form of free-flowing granules. Due to the solid state of the microporous particles and their good free-flowing properties, simple and precise dosage is possible. Furthermore, a complete intermixture of the solids can be achieved. Such a complete intermixture of two solids is beneficial, especially in case of the melt processing of thermoplastic synthetic polymers at higher temperature into the desired article like for example in extrusion. While the exposure to high temperatures should be as short as possible due to the degradation of the thermoplastic synthetic polymer at higher temperatures, a sufficiently homogenous spatial distribution of the compound of formula I in the synthetic polymer of the final article is assured if already two completely intermixed solids are fed into the continuous extrusion process. Accordingly, good long-term stabilization performance is provided for the article.

In the examples, the following additives and microporous materials are employed.
- HALS1: Bis-[2,2,6,6-tetramethyl-1-(undecyloxy)-piperidine-4-yl] carbonate, which is depicted below and which synthesis is disclosed in EP 1731508 A1, at example 1 as compound No. 1. HALS1 is liquid at room temperature.

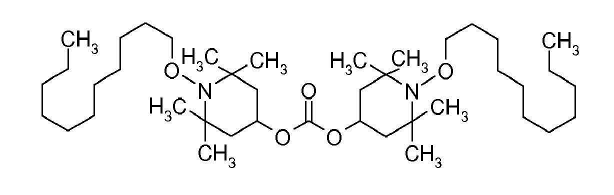

Microporous materials are selected from the commercial Accurel range (RTM Mem-brana):
- Accurel MP100 (which contains polypropylene)
- Accurel MP200 (which contains HD polyethylene)
- Accurel MP300 (which contains LLD polyethylene)
- Accurel MP400 (which contains LD polyethylene)
- Accurel MP500 (which contains poly[ethylene-co-vinylacetate])
- Accurel MP700 (which contains polyamide 6)
- Accurel MP1000 (which contains polypropylene)
- Accurel XP100 (which contains polypropylene)
- Accurel XP200 (which contains HD polyethylene)
- Accurel XP400 (which contains LD polyethylene)
- Accurel XP500 (which contains poly[ethylene-co-vinylacetate])
- Accurel XP600 (which contains polycarbonate)
- Accurel XP700 (which contains polyamide 6)
- Accurel XP712 (which contains polyamide 12)
- Accurel XP800 (which contains polystyrene)
- Accurel XP850 (which contains poly[styrene-co-butadiene])
- Accurel XP900 (which contains poly[ethylene terephthalate])
- Accurel XP950B (which contains bio polyester)

### Example 1: Uptake and loading capacity of HALS1 in different microporous materials

The microporous material presented in table 1 is added to an excess of HALS1 in a round bottom flask. The flask is attached to a rotary evaporator and placed in a water bath at 65°C. The additive is absorbed while rotating for 12 h. The loaded microporous material is filtered and washed with a small amount of pentane until free-flowing granules are obtained. The loaded microporous material is dried in vacuo and subsequently weighed to determine the loading capacity.

**Table 1**

| Entry | microporous material | weight of polymer [g] | total weight of polymer and HALS 1 [g] | weight of HALS1 absorbed [g] | weight ratio HALS1 / microporous material |
|---|---|---|---|---|---|
| 1^{a)} | Accurel MP700 | 5.00 | 13.80 | 8.80 | 1.76 |
| 2^{a)} | Accurel MP100 | 4.49 | 17.30 | 12.81 | 2.85 |
| 3^{a)} | Accurel MP200 | 5.14 | 16.24 | 11.10 | 2.16 |
| 4^{a)} | Accurel MP300 | 4.88 | 18.57 | 13.69 | 2.81 |
| 5^{a)} | Accurel MP500 | 5.19 | 19.27 | 14.08 | 2.71 |
| 6^{a)} | Accurel MP400 | 4.77 | 11.93 | 7.16 | 1.50 |
| 7^{a)} | Accurel MP1000 | 3.18 | 10.49 | 7.31 | 2.30 |
| 8^{a)} | Accurel XP800 | 6.43 | 13.76 | 7.24 | 1.13 |
| 9^{a)} | Accurel XP100 | 2.15 | 6.30 | 4.15 | 1.93 |
| 10^{a)} | Accurel XP200 | 3.15 | 11.65 | 8.5 | 2.70 |
| 11^{a)} | Accurel XP400 | 2.95 | 5.6 | 2.65 | 0.90 |
| 12^{a)} | Accurel XP500 | 5.34 | 19.12 | 13.78 | 2.58 |
| 13^{a)} | Accurel XP700 | 6.09 | 14.25 | 8.16 | 1.34 |
| 14^{a)} | Accurel XP712 | 5.48 | 13.21 | 7.73 | 1.41 |
| 15^{a)} | Accurel XP950B | 3.96 | 6.38 | 2.42 | 0.61 |
| 16^{a)} | Accurel XP900 | 4.76 | 7.28 | 2.52 | 0.53 |
| 17^{a)} | Accurel XP600 | 5.67 | 8.11 | 2.44 | 0.43 |
| 18^{a)} | Accurel XP850 | 4.56 | 7.20 | 2.64 | 0.58 |

| | | | | | |
|---|---|---|---|---|---|
| a) according to the invention | | | | | |

### Example 2: Alternative processes to load microporous material with additive

Method A: 50 g of each of the microporous material as specified in table 1 is transferred into a 500 mL round bottom flask and attached to a rotary evaporator device. The flask is submerged in a water bath heated to 65°C. A 50 weight-percent solution of HALS1 in pentane is added dropwise to the respective polymers while rotating at 50 rpm and under a vacuum of 200 mbar over a period of 2 h. After complete addition, rotating is continued until free flowing granulates are obtained.

Method B: 25 g of each of the microporous material as specified in table 1 and the indicated amount of HALS1 is transferred into a 250 mL round bottom flask. The flask is attached to a rotary evaporator device, submerged in a water bath heated to 65 °C while a vacuum of 100 mbar is applied to accelerate penetration of the microporous material. The flask is rotated until HALS1 is completely absorbed and free flowing granulates are obtained.

### Example 3: Alternative process to load microporous material with additive

The microporous material in table 2 is submerged in an excess of HALS1. The mixture is left at room temperature. After 24 h, the particles are isolated by filtration and washed with a small amount of pentane until free-flowing granules are obtained. The loaded microporous materials are dried in vacuo and subsequently weighed to determine the additive loading.

**Table 2**

| entry | microporous material | weight ratio HALS1 / weight micro-porous material |
|---|---|---|
| 1^{a)} | Accurel XP100 | 1.84 |
| 2^{a)} | Accurel XP200 | 2.70 |
| 3^{a)} | Accurel XP400 | 0.90 |
| 4^{a)} | Accurel MP500 | 2.71 |
| 5^{a)} | Accurel XP700 | 0.97 |
| 6^{a)} | Accurel XP712 | 2.08 |
| 7^{a)} | Accurel MP300 | 2.81 |

| | | |
|---|---|---|
| a) according to the invention | | |

### Example 4: Light stabilization of polyethylene films

Film manufacture:
In a turbo mixer (Caccia, Labo 10), particles of the indicated microporous material loaded with HALS1 (weight ratio HALS1 / microporous material is 0.5) and further additives as indicated in table 3 are mixed with low density polyethylene. Each of the mixture is extruded at a maximum temperature of 200°C using an O.M.C. twin-screw extruder (model ebv 19/25) to obtain granules. The obtained granules are subsequently mixed and diluted with the same low density polyethylene in order to obtain the final composition as indicated in table 3 for preparing a 150 µm thick film, using a blow-extruder (Dolci (RTM)) working at a maximum temperature of 210°C.

**Table 3: Final composition of the LDPE films**

| No. | additives |
|---|---|
| Film 1^{a)} | 0.8% Accurel MP 300 loaded with HALS1 (weight ratio HALS1 / microporous material of 0.50) 0.1% Irganox 1010^{b)} |
| Film 2^{a)} | 0.8% Accurel MP 400 loaded with HALS1 (weight ratio HALS1 / microporous material of 0.50) 0.1% Irganox 1010^{b)} |
| Film 3^{a)} | 0.8% Accurel MP 500 loaded with HALS1 (weight ratio HALS1 / microporous material of 0.50) 0.1% Irganox 1010^{b)} |

| | |
|---|---|
| a) according to the invention b) Irganox 1010 (RTM, BASF) is tetrakis-[3-(3,5-di-tert-butyl-4-hydroxy-phenyl)-propionyloxymethyl]-methane | |

Determination of stabilization performance of the films:
Light exposure: LDPE films are exposed in an ATLAS weatherometer (model Ci65A) equipped with a 6500W Xenon lamp (0.35W/m²; continuous light cycle, black panel temperature of 63°C).

Evaluation parameters:
1) Carbonyl increment: Evaluation of the carbonyl band increment (1710 cm⁻¹) in LDPE films to assess the performances as light/heat stabilizers. A higher increment value indicates a higher degree of undesired oxidative degradation.
2) Tensile elongation at break: Evaluation of elongation percentage property of LDPE films to assess the performances as light/heat stabilizers. The test is carried out with a Zwick Z1.0 testing machine: speed of 100 mm/min; holder distance of 30mm; temperature of 20°C. A value, which is closer to the starting value for tensile elongation at break, indicates less degradation.

The films show favourable results.

## Claims

1. A microporous particle comprising
a) a compound of formula I 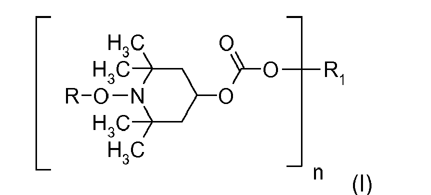 wherein
the radicals R are independently of one another an alkyl group or a hydroxyalkyl group having 1-30 carbon atoms or an alkenyl group having 2-30 carbon atoms,
n is an integer from 1 to 4,
when n = 1
R₁ is an alkyl group having 1-22 carbon atoms, an alkenyl group having 2-22 carbon atoms or the group represented by the formula **II** 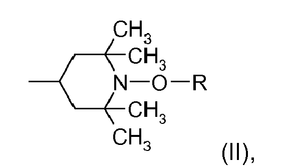 when n = 2 to 4
R₁ is an organic group having 2-20 carbon atoms of valency n,
and
b) a microporous material containing an organic polymer.

2. A particle according to claim 1,
wherein the microporous material contains an organic polymer selected from the group of homo- or copolymers of polyolefins, polystyrenes, polyvinylalcohols, polyacrylates, polymethacrylates, polyesters, polyamides and polycarbonates.

3. A particle according to claim 2,
wherein the microporous material contains an organic polymer selected from the group of high density polyethylene, linear low density polyethylene, polypropylene, polystyrene, poly(ethylene-co-methacrylate), poly(ethylene-co-vinylacetate), polyamide 6, polyamide 6.6, polyamide 12, poly(ethylene terephthalate), biopolyester, poly(styrene-co-butadiene) and polycarbonate.

4. A particle according to claims 1 to 3,
wherein the diameter of the particle is 5 to 1000 micrometers.

5. A particle according to claims 1 to 4,
wherein the pore size of the microporous material is 0.1 to 4 micrometers.

6. A particle according to claims 1 to 5, wherein the weight ratio between component (a) and component (b) is from 0.33 to 3.0.

7. A particle according to claims 1 to 6, wherein one or more further additives are contained and selected from the group of antioxidants, light stabilizers, UV absorbers, metal deactivators, phosphites, phosphonites, hydroxylamines, nitrones, thiosynergists, peroxide scavengers, nucleating agents and acid scavengers.

8. A particle according to claim 7, wherein the weight ratio between the total of component (a) and one or more further additives on one side and the component (b) on the other side is from 0.33 to 3.0.

9. A particle according to claims 1 to 8, wherein in formula I R is an alkyl group having 1-22 carbon atoms, n is 1 and R₁ is a group represented by formula II.

10. A particle according to claims 1 to 9, wherein in formula I R is undecyl, n is 1 and R₁ is a group represented by formula II.

11. A process for manufacturing a microporous particle as defined in claim 1, which comprises the addition of a compound of formula I to a microporous material containing an organic polymer.

12. The use of a micorporous particle as defined in claim 1 for stabilization of a synthetic polymer against degradation.
